# EUROPÄISCHE PATENTSCHRIFT

(11) **EP 1 797 628 B1**
(45) Veröffentlichungstag und Bekanntmachung des Hinweises auf die Patenterteilung: **24.06.2009**
(21) Anmeldenummer: 05792109.0
(22) Anmeldetag: 23.09.2005
(51) Int. Cl.: H02K 5/14, H02K 13/00, H01R 39/39

(54) **ELEKTROMOTOR UND ELEKTRISCHE ANTRIEBSEINHEIT FÜR KRAFTFAHRZEUGE**
ELECTRIC MOTOR AND ELECTRIC DRIVE UNIT FOR MOTOR VEHICLES
MOTEUR ELECTRIQUE ET UNITE D'ENTRAINEMENT ELECTRIQUE POUR VEHICULES

(30) Priorität: 29.09.2004 DE 202004015271 U
(43) Veröffentlichungstag der Anmeldung: 20.06.2007
(73) Patentinhaber: Brose Fahrzeugteile GmbH & Co. KG, 96403 Coburg (DE)
(72) Erfinder: KLIPPERT, Uwe, 96472 Rödental (DE)
(74) Vertreter: Blasberg, Tilo
(86) Internationale Anmeldenummer: PCT/EP2005/054781
(87) Internationale Veröffentlichungsnummer: WO 2006/035001

(56) Entgegenhaltungen:
- DE-A1- 10 141 244
- DE-C- 944 073
- FR-A- 2 104 345
- GB-A- 2 385 212

## Beschreibung

### GEBIET DER ERFINDUNG

Die vorliegende Erfindung betrifft einen Elektromotor für elektrische Antriebseinheiten von Kraftfahrzeugen, insbesondere einen Gleichstrom-Elektrokleinmotor, beispielsweise einen Permanentmagnet-Gleichstrom-Elektrokleinmotor. Ferner betrifft die Erfindung eine elektrische Antriebseinheit für Kraftfahrzeuge.

### HINTERGRUND DER ERFINDUNG

Bei einem Elektromotor der eingangs genannten Art erfolgt die Stromzufuhr in der Ankerwicklung über Bürsten oder Kohlen, die mit dem rotierenden Stromwender einen Gleitkontakt geben und so die Spulen mit Strom versorgen. Die Anfänge und Enden der Ankerspulen sind an die Lamellen des Kommutators (auch Stromwender bzw. Kollektor genannt) angeschlossen. Die Lamellen des Kollektors sind getrennt und regelmäßig um die Rotationsachse des Elektromotors herum verteilt, wobei jeweils diametral einander gegenüberliegende Lamellen mit den Enden derselben Windung des Ankers oder einer Gruppe von parallel geschalteten Verbindungen verbunden sind. Zwei ebenfalls diametral gegenüberliegende ortsfeste Bürsten oder Kohlen sind mit den Lamellen des Kommutators in einem Gleitkontakt. Kommutator und Bürsten wirken als mechanischer Schalter oder Wechselrichter, um die Stromrichtung durch die Ankerspulen geeignet umzukehren.

Beim Gleiten oder Reiben der Bürsten bzw. Kohlen an den Kommutatorlamellen entstehen Geräusche, die oftmals als störend empfunden werden.

Zur Minderung der Geräuschentwicklung sind aus dem Stand der Technik insbesondere die beiden folgenden Lösungsansätze bekannt: Gemäß einem ersten Lösungsansatz, wie beispielsweise in dem Deutschen Gebrauchsmuster DE 87 05 141 U1 offenbart, werden die Kohlen bzw. Bürsten in einem Schacht präzise geradgeführt, und zwar exakt in Radialrichtung des Kommutators. In diesem Schacht werden die Bürsten bzw. Kohlen mittels Rückstellelementen gegen den Kommutator vorgespannt. Die Geradführung minimiert tangentiale Ausweichbewegungen der Kohlen bzw. Bürsten, die zu Schwingungen der Bürsten führen. Gemäß einem anderen Lösungsansatz, von dem die vorliegende Erfindung ausgeht, werden die Kohlen bzw. Bürsten von Blattfedern, insbesondere von einseitig eingespannten Blattfedern an deren freiem Ende, getragen. Die Blattfedern sind gegen den Kommutator vorgespannt, um Schwingungen zu minimieren.

Dabei ist ein exakter Sitz der Bürsten bzw. Kohlen auf dem Kommutator notwendig. Hierzu ist bekannt, die Bürsten bzw. Kohlen auf deren Unterseite zu rillieren. Im Betrieb schleifen sich die Bürsten bzw. Kohlen zunächst ein, bis schließlich eine konkave Wölbung an deren Unterseite ausgebildet ist, die dem Außenumfang des Kommutators entspricht. Beim Einschleifen der Bürsten bzw. Kohlen entstehen störende Betriebsgeräusche, die es zu vermeiden gilt. Aus dem Stand der Technik ist ferner bekannt, die Unterseite der Bürsten bzw. Kohlen V-förmig oder mit dem Radius des Kommutators anzuschleifen. Die Bürsten bzw. Kohlen werden positioniert und im Betrieb eingeschliffen, bis schließlich eine konkave Wölbung an deren Unterseite ausgebildet ist, die dem Außenumfang des Kommutators entspricht. Durch geeignete Formgebung der Bürstenträger wird dabei stets versucht, eine genaue Positionierung der Bürsten zu erzielen.

GB-A-2 385 212 offenbart einen Gleichstrom-Elektrokleinmotor mit einem seitlich in eine Motorgehäuseöffnung einschiebbaren Bürstengruppenträger. In der Gehäuseöffnung sind Absätze ausgebildet, die als gehäusefester Anschlag wirken und mit einer an dem Bürstengruppenträger ausgebildeten Stufe zusammenwirken, um die axiale Stellung der Bürsten zu begrenzen. Auf der Innenseite der Bürstenträger sind Zapfen vorgesehen, die mit einem in der Gehäuseöffnung ausgebildeten Vorsprung zusammenwirken, um die Bürstenträger beim Einschieben des Bürstengruppenträgers in die Gehäuseöffnung aufzuweiten. Dadurch wird jedoch kein Rückstellmittel zum Vorspannen des Bürstengruppenträgers gegen den gehäusefesten Anschlag ausgebildet.

FR-A-2 104 345 offenbart einen Gleichstrom-Elektrokleinmotor, bei dem am Rand des Bürstengruppenträgers ein Vorsprung ausgebildet ist, der mit einer Gehäusewand zusammenwirkt und als Anschlag wirkt, um eine Stellung des Bürstengruppenträgers festzulegen.

### ZUSAMMENFASSUNG DER ERFINDUNG

Der Erfindung liegt die Aufgabe zugrunde, einen Gleichstrom-Elektrokleinmotor für Kraftfahrzeuge bereitzustellen, bei dem die Bürsten noch präziser positioniert werden können und eine Geräuschentwicklung noch weiter gemindert werden kann. Ferner soll gemäß der vorliegenden Erfindung eine entsprechende elektrische Antriebseinheit bereitgestellt werden.

Diese und weitere Aufgaben werden gemäß der vorliegenden Erfindung durch einen Elektromotor mit den Merkmalen nach Anspruch 1 sowie durch eine elektrische Antriebseinheit mit den Merkmalen nach Anspruch 19 gelöst. Weitere vorteilhafte Ausführungsformen sind Gegenstand der rückbezogenen Unteransprüche.

Die Erfindung geht somit aus von einem Elektromotor mit einem Gehäuse und einem Bürstengruppenträger, der zumindest zwei Bürstenträger mit daran befestigten Bürsten trägt, sodass die Bürsten vorgespannt an dem Kommutator anliegen. Dabei sind die Bürsten in Entsprechung zu dem Kommutator vorgeschliffen, beispielsweise V-förmig oder mit einer konkaven Wölbung in Entsprechung zu dem Außenumfang des Kommutators. Ferner ist der Bürstengruppenträger relativ zu dem Kommutator verschieblich gelagert und ein gehäusefester Anschlag vorgesehen, um die Bürsten präzise an dem Kommutator zu positionieren. Erfindungsgemäß zeichnet sich der Elektromotor dadurch aus, dass ein Rückstellmittel vorgesehen ist, um den Bürstengruppenträger gegen den Anschlag hin vorzuspannen. Um die optimale Positionierung der Bürsten aufrechtzuerhalten, ist der Bürstengruppenträger somit mithilfe eines Rückstellmittels gegen den Anschlag vorgespannt, beispielsweise mithilfe von Rückstellfedern oder flexiblen Leitern. Ein solches Rückstellmittel kann selbst elektrisch leitend sein, um die elektrisch leitenden Bürstenträger mit Anschlussvorrichtungen, beispielsweise Anschlusssteckern, des Elektromotors elektrisch leitend zu verbinden. Zu diesem Zweck kann das Rückstellmittel beispielsweise elastische, elektrisch leitende Laschen oder Drahtgebilde umfassen.

Dabei kann der Abstand der Bürsten zu dem Anlagebereich des Bürstengruppenträgers an dem gehäusefesten Anschlag vergleichsweise klein gehalten werden. Ferner kann der Abstand zwischen dem gehäusefesten Anschlag und der Motorwelle bzw. dem Kommutator klein gehalten werden. Ferner können die vorgenannten Elemente präzise ausgebildet werden. Weitere Fertigungstoleranzen, die beispielsweise durch das Einschieben einer Einschubelektronik in das Gehäuse des Elektromotors bedingt sind, haben dabei keinen Einfluss auf die Genauigkeit der Positionierung der Bürsten. Insgesamt können die Bürsten somit erfindungsgemäß präziser positioniert werden.

Gemäß einer weiteren Ausführungsform ist der Bürstengruppenträger in einem Träger geradgeführt verschieblich gelagert, kann also der Bürstengruppenträger im Wesentlichen ohne Verdrehung in einer Längsrichtung auf den Kommutator zu verschoben werden, beispielsweise beim Einschieben einer Einschubelektronik in das Gehäuse des Elektromotors.

Für eine solche Geradführung können geeignete mechanische Führungen, beispielsweise teleskopartige Führungen, Führungsschienen oder Führungsnuten, vorgesehen sein. Solche mechanischen Führungen können insbesondere auf der dem Bürstengruppenträger zugewandten und mit diesem zusammenwirkenden Innenseite des Gehäuses ausgebildet sein. Gemäß einer weiteren Ausführungsform wird eine solche Geradführung durch den Eingriff von an dem Bürstengruppenträger vorgesehenen Zapfen in zueinander parallel verlaufende Langlöcher in dem Träger ausgebildet. Dabei kann das Profil der Zapfen so auf den Querschnitt der Langlöcher abgestimmt sein, dass die Zapfen verdrehsicher in dem jeweiligen Langloch aufgenommen und/oder gegen ein Abheben derselben aus den Langlöchern gesichert in diesen aufgenommen sind.

Der gehäusefeste Anschlag kann mit dem Bürstengruppenträger, beispielsweise mit einem vorderen Rand desselben, oder mit den Bürstenträgern zusammen wirken, um die Bürsten zu positionieren.

Gemäß einer weiteren Ausführungsform kann die Lage bzw. Position des Anschlags in dem Gehäuse des Elektromotors veränderbar sein. Somit können Fertigungstoleranzen und Montagefehler, die in einer Fehlpositionierung der Bürsten auf dem Kommutator resultieren, ausgeglichen werden. Zu diesem Zweck kann ein Einstellmittel, beispielsweise eine Stellschraube, vorgesehen sein, das mit dem Anschlag zusammenwirkt, um die Lage bzw. Position des Anschlags in dem Gehäuse zu verändern. Ein solches Stellmittel kann auch von der Gehäuseaußenseite her zugänglich sein, so dass die Lage bzw. Position des Anschlags in dem Gehäuse auch während der Montage individuell für jeden Elektromotor optimiert werden kann, beispielsweise mittels eines Fertigungsautomaten mit Optimierungsfunktion.

Zum Verstellen des Anschlags kann dieser als Zunge in dem Gehäuse des Elektromotors ausgebildet sein, mit einem Ende, das einstückig mit dem Gehäuse ausgebildet oder an dieses angeformt ist, und mit einem freien Ende, dessen Lage mithilfe des Stellmittels verändert werden kann, beispielsweise durch Kraftbeaufschlagung und Verbiegen der Gehäusezunge. Dabei kann zwischen dem Anschlag und einem Gehäuseabschnitt ein Spalt ausgebildet sein, dessen Breite mithilfe des Einstellmittels eingestellt werden kann. Das Einstellmittel kann so ausgelegt sein, dass die Spaltbreite kontinuierlich veränderbar ist, beispielsweise durch Festziehen einer Stellschraube. Das Einstellmittel kann gemäß einer weiteren Ausführungsform auch so ausgelegt sein, dass die Spaltbreite nur in diskreten Schritten veränderbar ist, beispielsweise durch Einlegen oder Entfernen von Abstandselementen in den oder aus dem Spalt. Auf diese Weise lassen sich insbesondere auch systematische Fertigungstoleranzen und Montagefehler kompensieren.

Dabei kann der Bürstengruppenträger an dem Gehäuse des Elektromotors bzw. einer Antriebseinheit oder an einem in ein solches Gehäuse einschiebbaren Einschubelement über die bestimmungsgemäße Betriebsposition hinaus verschoben werden, wobei der gehäusefeste Anschlag die Verschiebbarkeit bzw. Verstellung des Bürstengruppenträgers so begrenzt, dass die Bürsten exakt an dem Kommutator positioniert sind.

Die Bürstenträger können als einseitig an dem Bürstengruppenträger eingespannte elastische Blattfedern ausgebildet sein, die an ihrem vorderen Ende jeweils eine Bürste tragen, um die Bürsten radial einwärts gegen den Kommutator vorzuspannen. Auch andere Konfigurationen von Blattfedern zur Lagerung der Bürsten des Elektromotors, beispielsweise V-förmig geknickte Blattfedern oder dergleichen, können erfindungsgemäß realisiert werden.

Gemäß einem weiteren Gesichtspunkt der vorliegenden Erfindung wird auch eine elektrische Antriebseinheit für Kraftfahrzeuge bereitgestellt, mit einem Elektromotor, wie vorstehend beschrieben. Eine solche elektrische Antriebseinheit kann beispielsweise für elektrische Fensterheber, insbesondere Seil-Fensterheber, vorgesehen sein oder als elektrische Stellmotoreinheit zur Erzeugung von Drehantriebskräften ausgebildet sein.

### FIGURENÜBERSICHT

Nachfolgend wird die Erfindung in beispielhafter Weise unter Bezugnahme auf die beigefügten Zeichnungen beschrieben werden, aus denen sich weitere Merkmale, Vorteile und zu lösende Aufgeben ergeben werden, und worin:
- Fig. 1: in einer Perspektivansicht und im Teilschnitt eine Antriebseinheit mit einem Elektromotor gemäß der vorliegenden Erfindung darstellt;
- Fig. 2: die Auslegung des Elektromotors und des Getriebes gemäß der Fig. 1 darstellt;
- Fig. 3: in einer Seitenansicht den Elektromotor gemäß der Fig. 1 darstellt; und
- Fig.4: in einer stark vergrößerten Perspektivansicht und im Teilschnitt den Elektromotor gemäß der Fig. 1 darstellt.

In den Figuren bezeichnen identische Bezugszeichen identische oder im Wesentlichen gleich wirkende Elemente oder Elementgruppen.

### AUSFÜHRLICHE BESCHREIBUNG VON BEVORZUGTEN AUSFÜHRUNGSBEISPIELEN

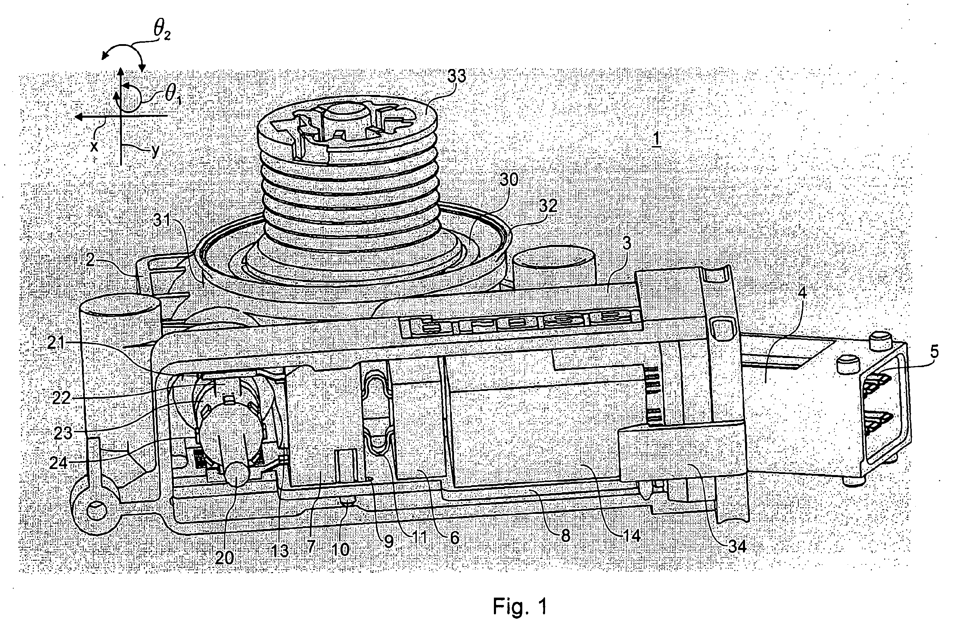

Gemäß der Fig. 1 sitzt auf der beweglichen Motorwelle 20 ein Ankerkern, auf dessen Außenumfangsoberfläche mehrere Kommutatorlamellen 23 regelmäßig und beabstandet zueinander angeordnet sind. Die von der Stirnseite des Ankerkerns abragenden Anschlusszungen 24 dienen der Kontaktierung der Ankerwicklungen. Gemäß der Fig. 1 sind an dem Bürstengruppenträger 7 zwei als Blattfedern ausgebildete Bürstenträger 21 befestigt, die abgewinkelt ausgebildet sind, mit einem schräg von dem Bürstengruppenträger 7 abragenden hinteren Ende und mit einem Abschnitt (in der Fig. 1 mit dem Bezugszeichen 21 bezeichnet), der einem entsprechend ausgebildeten Abschnitt diametral gegenüberliegt, parallel zu diesem verläuft und jeweils eine Bürste, Kohle oder ein Graphitteil (nachfolgend als Bürste 22 bezeichnet) trägt. Die Bürste 22 ist an dem vorderen, freien Ende des Bürstenträgers 21 in bekannter Weise starr mit diesem verbunden. Gemäß der Fig. 1 liegen die beiden Bürsten 22 einander diametral gegenüber, in Anlage zu Kommentatorlamellen 23 auf dem Außenumfang des Ankerkerns. Die Bürstenträger 21 sind somit als an ihrem hinteren Ende einseitig eingespannte Blattfedern ausgebildet, welche die Bürsten 22 mit einer Federkraft, die im Wesentlichen radial einwärts zu der Drehmitte der Motorwelle 20 gerichtet ist, gegen den Kommutator 23 vorspannt.

Im Betrieb des Elektromotors gleiten die Bürsten 22 auf den Kommutatorlamellen 23 und werden dabei zu Schwingungen angeregt. Diese Schwingungen erfolgen einerseits im Wesentlichen radial auswärts gerichtet, das heißt weg von der Kommutatorlamelle 23, und andererseits, zu einem geringeren Anteil, durchaus auch in Axialrichtung der Motorwelle 20. Solche Schwingungen können zu einer unerwünschten Geräuschentwicklung des Elektromotors führen.

Gemäß der Fig. 1 sitzt der Elektromotor in einer Antriebseinheit 1, die bei dem dargestellten Beispiel als Antriebseinheit für einen elektrischen Seil-Fensterheber für Kraftfahrzeuge ausgebildet ist, wenngleich die vorliegende Erfindung nicht auf diese Anwendung beschränkt sein soll. Gemäß der Fig. 1 umfasst die elektrische Antriebseinheit 1 einen Getriebegehäuseabschnitt 2 und einen Motorgehäuseabschnitt 3, in welchem der Elektromotor aufgenommen ist. Der Getriebegehäuseabschnitt 2 umfasst in der bekannten Weise eine zylindrische Aufnahme 31, in der ein Schneckenrad 30 aufgenommen ist, dessen Außenverzahnung mit einem Schneckenrad am vorderen Ende der tangential zu dem Schneckenrad 30 verlaufenden Motorwelle 20 kämmt. Auf der Oberseite des Schneckenrads 30 sitzt eine Seiltrommel 33, die mittels Formschluss mit dem Schneckenrad 30 verbunden ist. Somit wird eine Drehbewegung der Motorwelle 20 in eine Drehbewegung der Seiltrommel 33 um eine zur Motorwelle 20 senkrechte Achse übersetzt, um ein Seil oder ein Bowdenkabel aufzuwickeln oder abzuwickeln.

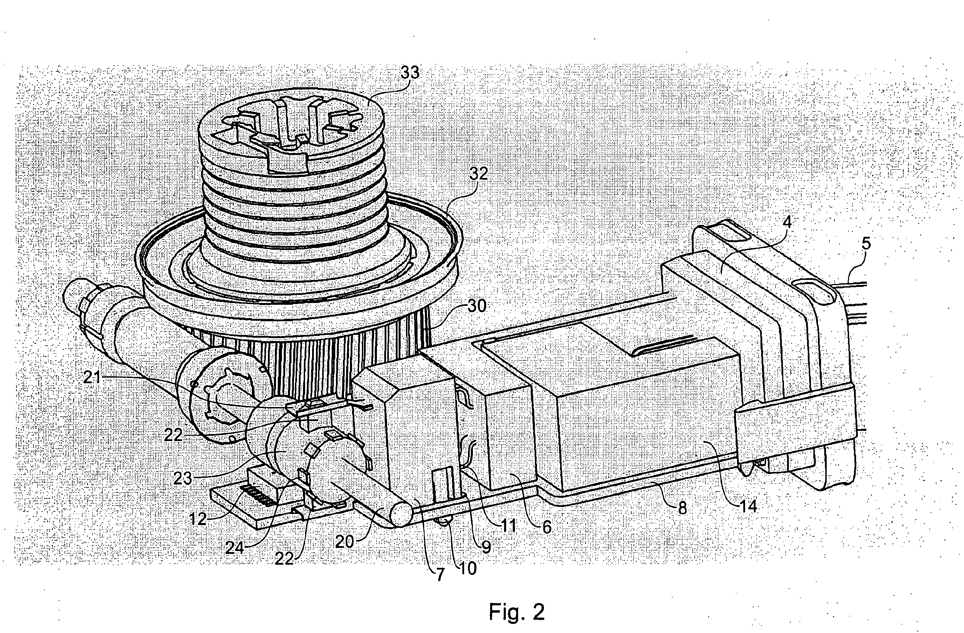

Gemäß der Fig. 1 weist der Motorgehäuseabschnitt 3 eine seitliche, im Wesentlichen rechteckförmige Öffnung auf, in die eine Einschubelektronik 4 seitlich eingeschoben werden kann. Diese Einschubelektronik soll nachfolgend anhand der Fig. 2 ausführlicher beschrieben werden, in der aus Gründen der Übersichtlichkeit das Gehäuse der Antriebseinheit weggelassen ist. Gemäß der Fig. 2 ist die Einschubelektronik 4 länglich ausgebildet und trägt an Ihrem vorderen Ende die beiden Bürsten 22, die an dem Kommutator 23 des Elektromotors anliegen. Die Einschubelektronik 4 umfasst einen plattenförmigen Träger 8, der beispielsweise auch als elektrische Leiterplatine (PCB) ausgebildet sein kann, auf dem ein hinterer Block 14, ein vorderer Block 6, ein Bürstengruppenträger 7 und eine Bauelementgruppe 12 sitzen. Während der hintere Block 14, der vordere Block 6 und die Bauelementgruppe 12 ortsfest auf dem plattenförmigen Träger 8 sitzen, ist der Bürstengruppenträger 7, wie nachfolgend ausgeführt, relativ zu dem plattenförmigen Träger 8 verschieblich gelagert. Die elektronische Bauelementgruppe 12 kann eine Entstörelektronik und/oder eine Steuerungseinrichtung für den Elektromotor umfassen und sitzt in unmittelbarer Nähe zu den Bürsten 22. Die schematisch rechteckförmig dargestellten Blöcke 6, 14 können weitere elektronische Bauelemente enthalten, beispielsweise zur Steuerung der elektrischen Antriebseinheit. Sämtliche elektronischen Bauelemente der Einschubelektronik 4 sind elektrisch leitend mit dem Anschlussstecker 5 an dem hinteren Ende der Einschubelektronik 4 verbunden. Die Einschubelektronik 4 wird in die seitliche Öffnung des Motorgehäuseabschnittes 3 (vgl. Fig. 1) eingeschoben, bis schließlich die Bürsten 22 auf dem Kommutator 23 des Elektromotors aufliegen.

Wie in der Fig. 1 erkennbar, sind die Bürsten 22 in Anpassung an den Kommutator 23 vorgeschliffen, nämlich auf der dem Kommutator 23 zugewandten Unterseite der Bürsten 22 ist eine konkave Vertiefung ausgebildet, mit einem Krümmungsradius, der dem Außenradius des Kommutators 23 entspricht. Wenngleich in den Figuren nicht dargestellt, können auf der Unterseite der Bürsten 22 Längsrillen ausgebildet sein, um ein Einschleifen der Bürsten 22 im Motorbetrieb zu unterstützen. Anstelle des konkav gewölbten Vorschliffes können auf der Unterseite der Bürsten 22 auch V-förmige Einkerbungen als Vorschliff ausgebildet sein. Für einen geräuscharmen Motorbetrieb ist es wichtig, dass die Bürsten 22 präzise auf dem Kommutator 23 positioniert sind, sodass Schwingungs- bzw. Ausweichbewegungen der Bürsten 22 im Motorbetrieb minimiert sind. Ferner muss die Positionierung der Bürsten 22 auf den Vorschliff der Bürsten 22 abgestimmt sein, um eine möglichst vollflächige Anlage der Bürsten 22 auf dem Kommutator 23 zu gewährleisten.

Die längliche Einschubelektronik 4 stellt jedoch einen vergleichsweise langen Hebel dar, was diesen Anforderungen zuwider läuft, da auch geringe Toleranzen bei der Montage der Einschubelektronik 4 in das Gehäuse der Antriebseinheit 1 zu vergleichsweise großen Lageabweichungen der Bürsten 22 auf dem Kommutator 23 führen werden. Um diese Lageabweichungen zu minimieren, ist gemäß der vorliegenden Erfindung der Bürstengruppenträger 7 an dem plattenförmigen Träger 8 verschieblich gelagert, bildet also quasi ein unabhängiges Bauteil, um Toleranzen bei der Montage der Einschubelektronik 4 auszugleichen.

Gemäß der Fig. 2 sind die Bürsten 22 an dem vorderen Ende der als Blattfedern ausgebildeten Bürstenträger 21 in der bekannten Weise starr befestigt. Die Blattfedern 21 sind an ihrem hinteren Ende einseitig in dem Bürstengruppenträger 7 eingespannt. Gemäß der Fig. 2 sind die Blattfedern 21 an ihrem hinteren Ende abgeknickt, sodass die vorderen Enden die Bürsten 22 elastisch und in Radialrichtung gegen den Kommutator 23 vorspannen. In der Betriebstellung gemäß der Fig. 2 liegen die beiden Bürsten 22 einander exakt diametral gegenüber und verlaufen die beiden vorderen Enden der Blattfedern 21 exakt parallel zueinander. Die Blattfedern 21 sind elektrisch leitend und sind elektrisch leitend mit dem Anschlussstecker 5 verbunden, beispielsweise über die in der Fig. 2 dargestellten federelastischen Leiter 11, die den Bürstengruppenträger 7 gegen den Anschlag hin vorspannen.

Gemäß der Fig. 2 sind an dem vorderen Ende des plattenförmigen Trägers 8 als Längsführungen wirkende Langlöcher 9 ausgebildet, die zueinander exakt parallel verlaufen und in die zwei auf der Unterseite des Bürstengruppenträgers 7 senkrecht von diesem abragende Zapfen bzw. Gleitelemente 10 eingreifen und in diesen gleitbeweglich geführt sind. Auf diese Weise ist der Bürstengruppenträger 7 an dem plattenförmigen Träger 8 in Längsrichtung der Einschubelektronik 4 verschieblich gelagert. Dabei können die Zapfen 10 so in das Langloch 9 eingreifen, dass der Bürstengruppenträger 7 axial geradgeführt ist, also exakt parallel zu den Seitenkanten des Trägers 8 im Wesentlichen spielfrei axial verschieblich ist, jedoch nicht um eine senkrecht auf den Träger 8 stehende Achse verdreht werden kann. Selbstverständlich kann eine solche Verdrehmöglichkeit auch gemäß einer weiteren Ausführungsform vorgesehen sein. Ferner kann der Zapfen 10 so in das Langloch eingreifen, dass der Bürstengruppenträger 7 vertikal, d. h. senkrecht zur Oberfläche des Trägers 8, im Wesentlichen spielfrei gelagert ist und somit gegen ein Abheben aus dem Langloch gesichert ist. Gemäß einer weiteren Ausführungsform kann jedoch auch ein solcher Höhenausgleich vorgesehen sein. Ferner kann gemäß einer weiteren Ausführungsform eine axiale Schwenkbewegung der Bürstengruppenträgers 7 um eine senkrecht auf den Träger 8 stehende Achse möglich sein. Insgesamt stellt der Bürstengruppenträger 7 somit ein unabhängiges Bauteil dar, das unabhängig von den Toleranzen bei der Montage der Einschubelektronik 4 präzise relativ zu dem Kommutator 3 bzw. der Motorwelle 20 exakt positioniert werden kann, wie nachfolgend ausgeführt.

Gemäß der Fig. 1 sind die elastischen Leiter 11 im Wesentlichen U-förmig ausgebildet und spannen den Bürstengruppenträger 7 elastisch gegen das vordere Ende der in dem Träger 8 ausgebildeten Langlöcher 9 vor. Der Bürstengruppenträger 7 und die Langlöcher 9 sind dabei so ausgebildet, dass ohne den gehäusefesten Anschlag 13 beim Einschieben der Einschubelektronik 4 in die Antriebseinheit 1 die Bürsten 22 zu weit auf den Kommutator 23 aufgeschoben würden, also nicht hinreichend genau positioniert wären. Wie in der Fig. 1 erkennbar, ist der Abstand zwischen den Bürsten 22 und dem vorderen Rand des Bürstengruppenträgers 7 durch die Geometrie der Blattfedern 21 genau vorgegeben.

Gemäß der vorliegenden Erfindung ist in dem Gehäuse der Antriebseinheit 1 ein gehäusefester Anschlag 13 vorgesehen, der so positioniert ist, dass der Abstand zwischen der Anlagefläche des Anschlags 13 mit dem Bürstengruppenträger 7 und der Motorwelle 20 exakt auf den vorgenannten Abstand zwischen den Bürsten 22 und dem vorderen Rand des Bürstengruppenträgers 7, der an dem Anschlag 13 in der Betriebsstellung des Elektromotors anliegt, abgestimmt ist. Ohne den Anschlag 13 würde der vordere Rand des Bürstengruppenträgers 7 in dessen Ruhestellung, wenn die Zapfen 10 aufgrund der von den elastischen Leitern 11 ausgeübten Vorspannung an dem vorderen Ende der Langlöcher 9 anliegen, über die Anschlagfläche des Anschlags 13 hinausragen. Erfindungsgemäß wird durch den gehäusefesten Anschlag 13 eine exakte Positionierung der Bürsten 22 an dem Kommutator 23 ermöglicht. Weil der Abstand zwischen dem gehäusefesten Anschlag 13 und der Motorwelle 20 im Vergleich zu der Gesamtlänge der Einschubelektronik 4 vergleichsweise gering ist, können die Bürsten 22 erfindungsgemäß hochpräzise positioniert werden, ohne dass Fertigungs- oder Montagetolerinzen der Einschubelcktronik 4 hierbei eine Rolle spielen.

Anstelle der elastischen Leiter 11 können auch andere Rückstellelemente, beispielsweise Rückstellfedern, vorgesehen sein, die den Bürstengruppenträger 7 relativ zu dem vorderen Block 6 zum vorderen Ende des Trägers 8 hin elastisch vorspannen. Zur elektrischen Kontaktierung der Blattfedern 21 und der Bürsten 22 können diese Rückstellelemente in gleicher Weise verwender werden oder können die Zapfen 10 elektrisch leitend mit den Blattfedern 21 verbunden sein und im Bereich der Langlöcher 9 elektrische Kontaktzungen vorgesehen sein, die elektrisch leitend mit dem Anschlussstecker 5 verbunden sind.

Wie in der Fig. 1 gezeigt, ragt der gehäusefeste Anschlag 13, im Wesentlichen parallel zu der Motorwelle 20, in den Bereich des Motorgehäuseabschnittes 3 hinein, in den die Einschubelektronik 4 eingeschoben wird. Dabei kann der gehäusefeste Anschlag 13 so ausgelegt sein, dass dieser nicht in die Bahn der Bürsten 22 beim Einschieben der Einschubelektronik 4 in den Motorgehäuseabschnitt 3 hineinragt. Der Anschlag 13 kann einstückig mit dem Gehäuse der Antriebseinheit 1 ausgebildet sein, beispielsweise durch Spritzgießen aus einem Kunststoff. Der Anschlag 13 kann auch nachträglich fest mit dem Gehäuse der Antriebseinheit 1 verbunden werden, beispielsweise mittels einer Schraub- oder Klebeverbindung.

Wie durch den Einsatz links oben in der Fig. 1 angedeutet, begrenzt der Anschlag 13 die Position des Bürstengruppenträgers 7 in Längsrichtung x der Antriebseinheit 1. Somit ist der Bürstengruppenträger 7 zumindest in Längsrichtung x an dem Träger 8 verschieblich gelagert. Ergänzend können für den Bürstengruppenträger 7 gemäß weiteren Ausführungsformen noch die folgenden Verstellmöglichkeiten bestehen: Höhenausgleich in y-Richtung und/oder senkrecht zum Träger 8 und/oder Schwenkbewegung um die y-Achse (Winkelverstellung Θ2) und/oder Verdrehen um die y-Achse (Winkelverstellung Θ1). Gemäß diesen weiteren Ausführungsformen legt dabei der Anschlag 13 nicht nur die Position des Bürstengruppenträgers 7 in x-Richtung sondern auch die Höhe (y-Richtung) und/oder die Winkelstellung (Winkel Θ1 und/oder Winkel Θ2) relativ zu der Motorwelle 20 fest.

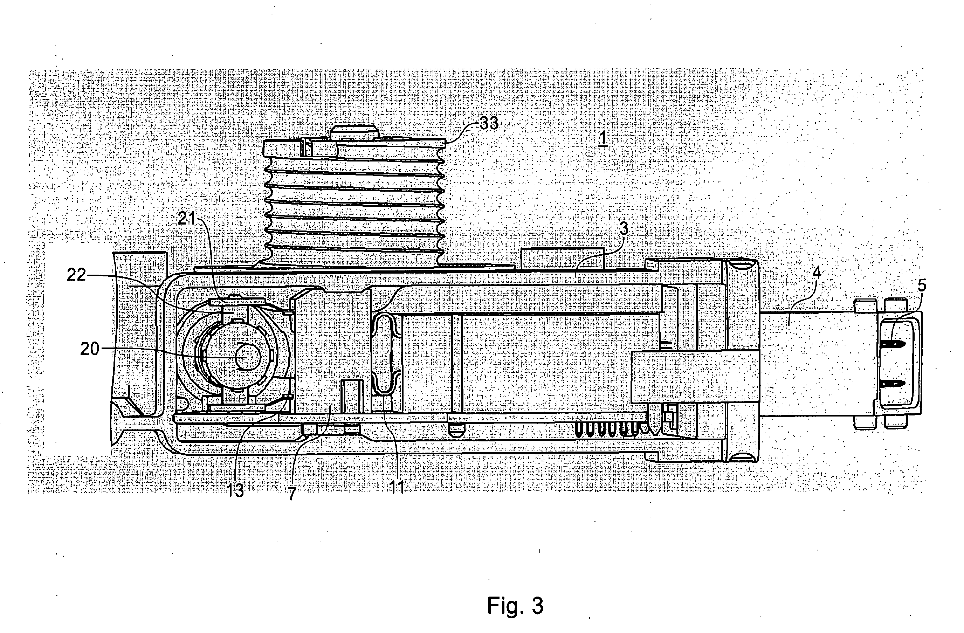

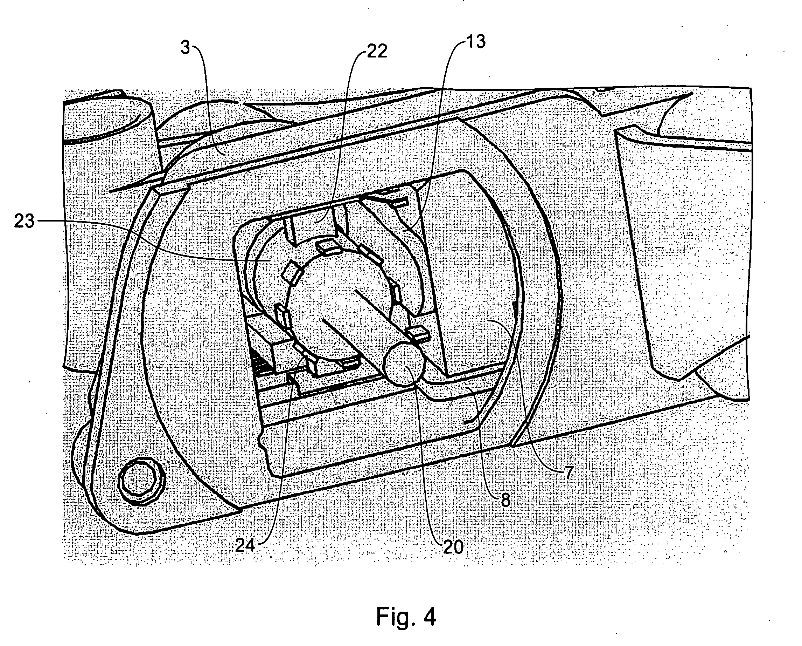

Die Fig. 3 zeigt den Elektromotor gemäß der Fig. 1 in einer schematischen Seitenansicht. Die Fig. 4 zeigt in einer stark vergrößerten Perspektivansicht, wie der vordere Rand des Bürstengruppenträgers 7 an dem gehäusefesten Anschlag 13 in der Betriebstellung des Elektromotors anliegt.

Gemäß einer weiteren Ausführungsform (nicht gezeigt) kann die Position bzw. Lage des Anschlags in dem Gehäuse durch ein Einstellmittel, beispielsweise eine Schraube oder ein Abstandselement, verändert werden. Dabei kann der Anschlag als einseitig mit dem Gehäuse verbundene oder an diesem ausgebildete Zunge ausgebildet sein, wobei zwischen dem Anschlag und einem diesem gegenüberliegenden Gehäuseabschnitt ein Spalt ausgebildet ist, dessen Breite mithilfe des vorgenannten Einstellmittels verändert werden kann. Auf diese Weise lassen sich auch systematische Fertigungs- und Montagetoleranzen kompensieren.

Um Fertigungstoleranzen des Gehäuses noch weiter zu minimieren, kann erfindungsgemäß das Gehäuse der Antriebseinheit und der Anschlag aus einem gemeinsamen Werkzeug ausgebildet werden, insbesondere durch Spritzgießen aus einem Kunststoff, das so ausgelegt ist, dass eine Entformungsrichtung zum Entformen von Lageraufnahmen bzw. -stellen der Ankerwelle des Elektromotors und des Anschlags gleich ist.

Zur Montage der Antriebseinheit 1 wird wie folgt vorgegangen: Zunächst wird das Gehäuse mit der Motorwelle 20, dem Kommutator 23 und dem Pol-Gehäuse (nicht gezeigt) bestückt und die Einschubelektronik 4, wie in der Fig. 2 gezeigt, ausgebildet. Anschließend wird die Einschubelektronik 4 seitlich in den Motorgehäuseabschnitt 3 eingeschoben, sodass die Bürsten 22 auf den Kommutator 23 aufgeschoben werden. Beim weiteren Einschieben der Einschubelektronik 4 gelangt schließlich der vordere Rand des Bürstengruppenträgers 7 in Anlage zu dem gehäusefesten Abschnitt 13, was die Betriebsstellung des Elektromotors festlegt. Schließlich wird die Einschubelektronik 4 mithilfe des Schnapp- oder Rastelements 34 an dem Motorgehäuseabschnitt 3 verrastet oder in anderer Weise fest mit diesem verbunden.

Während der Montage der Antriebseinheit, wie vorstehend beschrieben, kann permanent eine Qualitätskontrolle vorgenommen werden um zu ermitteln, ob die Bürsten 22 optimal positioniert sind. Abweichungen von der optimalen Positionierung können während der Produktion beispielsweise dadurch ausgeglichen werden, dass die Position der Bürsten an den Blattfedern 21 und/oder die Einspannung der Blattfedern 21 an dem Bürstengruppenträger 7 und/oder der vordere Rand des Bürstengruppenträgers 7 und/oder die Lage des gehäusefesten Abschnittes 13 und/oder die Anlagefläche des gehäusefesten Anschlags 13 geeignet modifiziert wird, um eine optimale Positionierung der Bürsten 22 zu gewährleisten. Wie dem Fachmann ohne weiteres ersichtlich sein wird, können die vorgenannten Maßnahmen ohne weiteres auch während einer laufenden Produktion vorgenommen werden, sodass erfindungsgemäß eine elektrische Antriebseinheit mit geringen Betriebsgeräuschen zu geringen Herstellungskosten hergestellt werden kann.

Wie dem Fachmann anhand der Fig. 1 ohne weiteres ersichtlich sein wird, kann der vorgenannte Anschlag zugleich auch zum Aufspreizen und Führen der Bürstenträger 21 beim Aufschieben der Bürsten 22 auf den Kommutator 23 ausgelegt sein. Zu diesem Zweck können die Innenseiten der Bürstenträger 21 mit Seitenflächen des Anschlags zusammenwirken. Die Seitenflächen des Anschlags können dabei unter einem spitzen Winkel, in Einschieberichtung der Einschubelektronik gesehen, auseinander laufen, so dass die Bürstenträger 21 beim Einschieben der Einschubelektronik allmählich bis auf den Durchmesser des Kommutators aufgespreizt werden. Durch die Seitenflächen des Anschlags kann die Bewegung der Bürsten 22 beim Einschieben der Einschubelektronik in das Gehäuse insbesondere so gesteuert werden, dass die Bürsten unter geringem Abstand zu den Kommutatorlamellen 23 im Wesentlichen tangential auf den Kommutator zu bewegt und auf diese im Wesentlichen radial aufgesetzt werden.

### Bezugszeichenliste

- 1: Elektrische Antriebseinheit
- 2: Getriebegehäuseabschnitt
- 3: Motorgehäuseabschnitt
- 4: Einschubelektronik
- 5: Anschlussstecker
- 6: Baugruppenträger / vorderer Block
- 7: Bürstengruppenträger
- 8: Elektrische Leiterplatine / plattenförmiger Träger
- 9: Aussparung / Führung
- 10: Zapfen / Gleitelement
- 11: Flexibler Leiter
- 12: Elektronische Bauelementgruppe / Chip
- 13: Anschlag
- 14: hinterer Block
- 20: Motorwelle
- 21: Bürstenträger
- 22: Bürste
- 23: Kommutator
- 24: Ankerzungen
- 30: Schneckenrad
- 31: Seitenwand
- 32: Dichtung
- 33: Seiltrommel
- 34: Schnappelement

## Patentansprüche

1. Gleichstrom-Elektrokleinmotor für Kraftfahrzeuge, mit einem Gehäuse (3) und einem Bürstengruppenträger (7), der zumindest zwei Bürstenträger (21) mit daran befestigten Bürsten (22) trägt, sodass die Bürsten vorgespannt an dem Kommutator (23) anliegen, wobei die Bürsten (22) in Entsprechung zu dem Kommutator (23) vorgeschliffen sind, der Bürstengruppenträger (7) relativ zu dem Kommutator (23) verschieblich gelagert ist und ein gehäusefester Anschlag (13) vorgesehen ist, um die Bürsten (22) präzise an dem Kommutator zu positionieren, **dadurch gekennzeichnet, dass** ein Rückstellmittel (11) vorgesehen ist, um den Bürstengruppenträger (7) gegen den Anschlag (13) hin vorzuspannen.

2. Elektromotor nach Anspruch 1, bei dem der Bürstengruppenträger (7) radial zu dem Kommutator (23) verschieblich gelagert ist, sodass die Bürsten (22) tangential auf den Kommutator (23) aufschiebbar sind.

3. Elektromotor nach einem der vorhergehenden Ansprüche, bei dem das Rückstellmittel an dem Bürstengruppenträger (7) abgestützt oder ausgebildet ist.

4. Elektromotor nach einem der vorhergehenden Ansprüche, bei dem das Rückstellmittel (11) elektrisch leitend ist, um den Bürstengruppenträger (7) oder die Bürstenträger (21) mit Anschlussmitteln (5) zu verbinden.

5. Elektromotor nach Anspruch 4, bei dem das Rückstellmittel (11) zumindest ein elastisches und elektrisch leitendes Verbindungsmittel umfasst.

6. Elektromotor nach einem der vorhergehenden Ansprüche, bei dem der Bürstengruppenträger (7) in einem Träger (8) geradgeführt verschieblich gelagert ist.

7. Elektromotor nach Anspruch 6, bei dem an dem Bürstengruppenträger (7) vorgesehene Zapfen (10) in zueinander parallele Langlöcher (9) in dem Träger (8) eingreifen.

8. Elektromotor nach Anspruch 7, bei dem die Zapfen (10) und/oder die Langlöcher (9) so ausgebildet sind, dass die Zapfen gegen ein Abheben aus den Langlöchern gesichert sind.

9. Elektromotor nach Anspruch 6, wobei das Gehäuse (3) eine Führung zum Führen des Bürstengruppenträgers (7) aufweist.

10. Elektromotor nach einem der vorhergehenden Ansprüche, bei dem der Anschlag (13) mit dem Bürstengruppenträger (7) zusammenwirkt, um die Bürsten zu positionieren.

11. Elektromotor nach einem der vorhergehenden Ansprüche, bei dem der Bürstengruppenträger (7) gemeinsam mit einer Entstörelektronik (12) an einem Einschubelement (4, 8) gelagert ist, das seitlich in das Gehäuse (3) einschiebbar ist, um die Bürsten (22) tangential auf den Kommutator aufzuschieben.

12. Elektromotor nach Anspruch 11, bei dem der Anschlag (13) nicht in eine Bahn hineinragt, entlang der die Bürsten (22) beim Einschieben des Einschubelements (4, 8) in das Gehäuse bewegt werden.

13. Elektromotor nach einem der vorhergehenden Ansprüche, bei dem der Bürstengruppenträger (7) gleitbeweglich auf elektrischen Kontaktzungen (9) gelagert ist, die mit Anschlussmitteln (5) elektrisch leitend verbunden sind.

14. Elektromotor nach einem der vorhergehenden Ansprüche, bei dem die Bürstenträger (21) als einseitig eingespannte Blattfedern (21) ausgebildet sind, die an ihrem vorderen Ende jeweils eine Bürste (22) tragen, die radial einwärts gegen den Kommutator vorgespannt ist.

15. Elektromotor nach einem der vorhergehenden Ansprüche, bei dem eine dem Kommutator zugewandte Oberfläche der Bürsten (22) V-förmig oder konkav in Entsprechung zu dem Profil des Kommutators (23) gewölbt vorgeschliffen ist.

16. Elektromotor nach einem der vorhergehenden Ansprüche, bei dem die dem Kommutator zugewandte Oberfläche der Bürsten (22) ferner mit Rillen versehen ist, die tangential zu dem Kommutator verlaufen.

17. Elektromotor nach einem der vorhergehenden Ansprüche, bei dem der Anschlag (13) elastisch ausgebildet ist und die Lage des Anschlags (13) in dem Gehäuse (3) über Einstellmittel justierbar ist.

18. Elektromotor nach einem der vorhergehenden Ansprüche, bei dem das Gehäuse (3) und der Anschlag (13) so ausgestaltet sind, dass zum Ausbilden des Anschlags (13) und von Lageraufnahmen bzw. Lagerstellen einer Ankerwelle (20) des Elektromotors durch Spritzgießen aus einem Kunststoff ein gemeinsames Werkzeug mit gleicher Entformungsrichtung für den Anschlag (13) und die Lageraufnahmen bzw. Lagerstellen verwendbar ist.

19. Elektrische Antriebseinheit für Kraftfahrzeuge, insbesondere für Fensterheber oder als elektrische Stellmotoreinheit ausgebildet, **gekennzeichnet durch** einen Elektromotor nach einem der vorhergehenden Ansprüche.

## Claims

1. A direct current low-power electric motor for motor vehicles, comprising a housing (3) and a brush assembly holder (7), holding at least two brush holders (21) with brushes (22) attached thereto, such that the brushes are in biased contact with the commutator (23), wherein the brushes (22) arc pre-grotmd in correspondance to the commutator (23), the brush assembly holder (7) is movably supported in relation to the commutator (23) and a limit stop (13) fixed relative to the housing is provided in order to position the brushes (22) accurately on the commutator, **characterised in that** a restoring means (11) is provided in order to bias the brush assembly holder (7) towards the limit stop (13).

2. The electric motor according to claim 1, in which the brush assembly holder (7) is movably supported radially to the commutator (23) such that the brushes (22) are capable of being pushed tangentially onto the commutator (23).

3. The electric motor according to any of the preceding claims, in which the restoring means is supported or formed on the brush assembly holder (7).

4. The electric motor according to any of the preceding claims, in which the restoring means (11) is electrically conductive in order to join the brush assembly holder (7) or the brush holder (21) to connection means (5).

5. The electric motor according to claim 4, in which the restoring means (11) comprises at least one elastic and electrically conductive joining means.

6. The electric motor according to any of the preceding claims, in which the brush assembly holder (7) is movably supported in a straight line within a mount (8).

7. The electric motor according to claim 6, in which pins (10) provided on the brush assembly holder (7) engage in elongated slots (9) which arc parallel to each other in the mount (8).

8. The electric motor according to claim 7, in which the pins (10) and/or the elongated slots (9) are formed such that the pins are secured against lifting out of said elongated slots.

9. The electric motor according to claim 6, wherein the housing (3) has a guide for guiding the brush assembly holder (7).

10. The electric motor according to any of the preceding claims, in which the limit stop (13) co-operates with the brush assembly holder (7) in order to position the brushes.

11. The electric motor according to any of the preceding claims, in which the brush assembly holder (7) is supported together with an electronic radio interference suppressor module (12) on a plug-in clement (4, 8) which can be pushed into the housing (3) from the side in order to push the brushes (22) tangentially onto the commutator.

12. The electric motor according to claim 11, in which the brushes (22) are moved along a predetermined path when the plug-in element (4, 8) is pushed into the housing whereby the limit stop (13) is shaped such that it does not project into said predetermined path.

13. The electric motor according to any of the preceding claims, in which the brush assembly holder (7) is supported so as to slide movably on electric contact tongues (9) which are joined to connector means (5) so as to be electrically conductive.

14. The electric motor according to any of the preceding claims, in which the brush holders (21) are formed as leaf springs (21) clamped on one end, which each hold a brush (22) on their front end, said brush being biased radially inwards against the commutator.

15. The electric motor according to any of the preceding claims, in which a surface of the brushes (22) facing towards the commutator is pre-ground in a V-shape or concave curvature corresponding to the profile of the commutator (23).

16. The electric motor according to any of the preceding claims, in which the surface of the brushes (22) facing towards the commutator is further provided with grooves which run tangentially to said commutator.

17. The electric motor according to any of the preceding claims, in which the limit stop (13) is formed elastically and the,position of the limit stop (13) in the housing (3) is adjustable by way of adjustment means.

18. The electric motor according to any of the preceding claims, in which the housing (3) and the limit stop (13) are configured such that a common tool with the same demoulding direction can be used for the limit stop (13) and the bearing supports or bearing points for forming said limit stop (13) and bearing supports or bearing points of a rotor shaft (20) of the electric motor by means of injection moulding from a plastic.

19. An electric drive unit for motor vehicles, in particular for window lifts or designed as an electric actuator unit, **characterised by** an electric motor according to any of the preceding claims.

## Revendications

1. Un moteur électrique à courant continu de puissance faible pour des véhicules à moteur, comportant un logement (3) et un assemblage de support de brosse (7), supportant au moins deux supports de brosse (21) avec les brosses (22) y jointes, tel que les brosses sont en contact polarisé avec le collecteur (23), où les brosses (22) sont pré-polarisés à la terre dans la correspondance avec le collecteur (23), l' assemblage de support de brosse (7) étant soutenu de manière mobile par rapport au collecteur (23) et un arrêt de limite (13) fixé par rapport au logement est disposé pour positionner de manière précise les brosses (22) sur le collecteur, **caractérisé en ce que** moyens de restoration (11) est fourni afin de polariser l' assemblage de support de brosse (7) vers l'arrêt de limite (13).

2. Le moteur électrique selon la revendication 1, dans laquelle l' assemblage de support de brosse (7) est soutenu radialement de manière mobile relativement au collecteur (23) tel que les brosses (22) sont susceptibles d'être poussées tangentiellement sur le collecteur (23).

3. Le moteur électrique selon l'une quelconque des revendications précédentes, dans lequel le moyen de restoration (11) est soutenu ou formé sur l' assemblage de support de brosse (7).

4. Le moteur électrique selon l'une quelconque des revendications précédentes, dans lequel le moyen de restoration (11) est électriquement conducteur afin de joindre 1' assemblage de support de brosse (7) ou le support de brosse (21) à des moyens de connection (5).

5. Le moteur électrique selon la revendication 4, dans lequelle le moyen de restoration (11) comporte au moins un moyen de jonction élastique et électriquement conducteur.

6. Le moteur électrique selon l'une quelconque des revendications précédentes, dans lequel l' assemblage de support de brosse (7) est soutenu de manière mobile suivant une ligne droite dans une monture (8).

7. Le moteur électrique selon la revendication 6, dans lequel des broches (10) sont disposées sur l'assemblage de support de brosse (7) s'engagent dans les fentes allongés (9) qui sont parallèles dans la monture (8).

8. Le moteur électrique selon la revendication (7), dans laquelle les broches (10) et/ou les fentes allongées (9) sont formées de telle sorte que les broches sont tenues malgré l'extraction desdites fentes allongées.

9. Le moteur électrique selon la revendication 6, où le logement (3) dispose d'un guide pour guider l'assemblage de support de brosse (7).

10. Le moteur électrique selon quels des revendications précédentes, dans lesquelles l'arrêt de limite (13) coopère avec l'assemblage de support de brosse (7) en vue du positionnement des brosses.

11. Le moteur électrique selon l'une quelconque des revendications précédentes, dans lequel l'assemblage de support de brosse (7) est soutenu avec un module suppresseur d'interférences radio électronique (12) sur un élément enfichable (4, 8) qui peut être poussé à l'intérieur du logement (3) sur le côté afin de pousser les brosses (22) tangentiellement sur le collecteur.

12. Le moteur électrique selon la revendication 11, dans lequel les brosses (22) sont déplacées le long d'un chemin prédéterminé lorsque l'élément enfichable (4, 8) est poussé dans le logement de telle manière que l'arrêt de limite (13) est mise en forme pour éviter qu'il ne se projette sur ledit chemin prédéterminé.

13. Le moteur électrique selon quels des revendications précédentes, dans lesquelles l'assemblage de support de brosse (7) est soutenu afin de glisser sur les tenons électriques de contact (9) qui sont joints à des moyens de connexion (5) afin d'être électriquement conducteur.

14. Le moteur électrique selon l'une quelconque des revendications précédentes, dans lequel les supports de brosse (21) présentent la forme de ressorts à lame (21) maintenus à une extrémité, dont chacun maintient une brosse (22) à leur extrémité avant, ladite brosse étant polarisée radialement contre l'intérieur contre le collecteur.

15. Le moteur électrique selon l'une quelconque des revendications précédentes, dans lequel une surface des brosses (22) faisant face au collecteur est la pré-polarisé vers la terre suivant une forme de V ou une courbe concave correspondante au profil du collecteur (23).

16. Le moteur électrique selon l'une quelconque des revendications précédentes, dans lequel la surface des brosses (22) faisant face au collecteur dispose en outre de rainures s'étendant tangentiellement audit collecteur.

17. Le moteur électrique selon l'une quelconque des revendications précédentes, dans lesquelles l'arrêt de limite (13) est formé de manière élastique et la position de l'arrêt de limite (13) au sein du logement (3) est réglable au moyen d'éléments d' ajustement.

18. Le moteur électrique selon l'une quelconque des revendications précédentes, dans lequel le logement (3) et arrêt de limite (3) sont configurés tels qu'un outil commun suivant la même direction de démoulage peut être utilisé pour l'arrêt de limite (13) et les supports d' appui ou les points d' appui pour former ledit arrêt limite (13) et les supports d'appui ou les points d' appui d' un axe de rotor (20) du moteur électrique au moyens de moulage par injection de plastique.

19. Une unité électrique d'entraînement pour des véhicules à moteur, en particulier pour des actionneurs de fenêtre ou conçu comme unité électrique d' actionneur, **caractérisée par** un moteur électrique selon quels des revendications précédentes.
